# EUROPEAN PATENT APPLICATION

(11) **EP 3 705 690 A1**
(43) Date of publication of application: **09.09.2020**
(21) Application number: 20159385.2
(22) Date of filing: 25.02.2020
(51) Int. Cl.: F01D 25/24, F01D 25/28, F16B 5/02, F16B 41/00

(54) **COVER SECURED BY CAPTIVE FASTENER**

(30) Priority: 05.03.2019 US 201916293208
(71) Applicant: United Technologies Corporation, Farmington, CT 06032 (US)
(72) Inventor: DUNNIGAN, Rebecca R., Sturbridge, MA 01566 (US); GREENBERG, Randall Lee, Oxford, CT 06478 (US)
(74) Representative: Dehns

(57) **Abstract**

A cover assembly (100; 200; 300) is disclosed. In various embodiments, the cover assembly includes a cover (104; 204; 304) configured to close a passageway through a casing (102; 202; 302), the cover having a first keyhole slot (222; 322); and a first captive fastener (220; 320) configured to extend through the first keyhole slot and into the casing.

## Description

### FIELD

The present disclosure relates generally to gas turbine engines and, more particularly, to cover plates secured by captive fasteners, allowing for inspection, repair or replacement of components within the gas turbine engines with reduced risk of foreign object damage.

### BACKGROUND

Gas turbine engines typically include a fan section, a compressor section, a combustor section and a turbine section. During operation, air is pressurized in the compressor section and mixed with fuel and burned in the combustor section to generate hot combustion gases. The hot combustion gases are then communicated through the turbine section, where energy is extracted from the hot combustion gases to power the compressor section, the fan section and various other loads occurring within or proximate a gas turbine engine.

A core engine of a gas turbine engine typically includes the compressor, the combustor and the turbine, each of which is surrounded by a core engine casing. During the life cycles of such components, inspection, repair or replacement is often required. Various techniques for accomplishing such inspection, repair or replacement require removal or disassembly of the core engine casing, sections thereof or cover plates configured to enclose critical components of the engine. Such disassembly, even when limited to removal of cover plates, may result in inadvertent foreign object debris being introduced into the engine prior to reassembly. The foreign object debris may result in damage to the engine upon being placed back in operation.

### SUMMARY

A cover assembly is disclosed. In various embodiments, the cover assembly includes a cover configured to close a passageway through a casing, the cover having a first keyhole slot; and a first captive fastener configured to extend through the first keyhole slot and into the casing.

In various embodiments, the casing defines a casing contour and the cover defines a cover contour having the same shape as the casing contour. In various embodiments, the cover is configured to slide along the casing in a longitudinal direction. In various embodiments, the first keyhole slot is disposed on a first lateral side of the cover. In various embodiments, a second keyhole slot is disposed on a second lateral side of the cover. In various embodiments, the first keyhole slot and the second keyhole slot are aligned in the longitudinal direction.

In various embodiments, the first captive fastener includes a threaded body configured to extend through the casing. In various embodiments, the first captive fastener includes a first blocking member disposed on a first distal end of the first captive fastener. In various embodiments, a second captive fastener is configured to extend through the second keyhole slot and into the casing.

In various embodiments, the first captive fastener includes a first blocking member configured to prevent the first captive fastener from being removed from the casing. In various embodiments, a second captive fastener is configured to extend through a second keyhole slot and into the casing, the second captive fastener including a second blocking member configured to prevent the second captive fastener from being removed from the casing.

In various embodiments, the first keyhole slot and the second keyhole slot are aligned in a longitudinal direction and disposed, respectively, on a first lateral side and a second lateral side of the cover with respect to the longitudinal direction. In various embodiments, the first blocking member comprises at least one of a deformed portion, a weld and a pin member disposed on a first distal end of the first captive fastener.

A gas turbine engine is disclosed. In various embodiments, the gas turbine engine includes a casing; a cover configured to close a passageway through the casing, the cover having a first keyhole slot and a second keyhole slot, both the first keyhole slot and the second keyhole slot aligned along a longitudinal direction; a first captive fastener configured to extend through the first keyhole slot and into the casing; and a second captive fastener configured to extend through the second keyhole slot and into the casing.

In various embodiments, the first keyhole slot is disposed on a first lateral side of the cover and the second keyhole slot is disposed on a second lateral side of the cover. In various embodiments, the first captive fastener includes a first blocking member configured to prevent the first captive fastener from being removed from the casing and the second captive fastener includes a second blocking member configured to prevent the second captive fastener from being removed from the casing. In various embodiments, the first blocking member comprises at least one of a first deformed portion, a first weld and a first pin member disposed on a first distal end of the first captive fastener and the second blocking member comprises at least one of a second deformed portion, a second weld and a second pin member disposed on a second distal end of the second captive fastener.

A method for accessing a component housed within a casing is disclosed. In various embodiments, the method includes the steps of releasing a first captive fastener extending through a first keyhole slot of a cover and into the casing; releasing a second captive fastener extending through a second keyhole slot of the cover and into the casing; sliding the cover in a longitudinal direction with respect to the first keyhole slot and the second keyhole slot; and removing the cover from the casing to expose the component.

In various embodiments, the step of releasing the first captive fastener includes unthreading the first captive fastener a first distance from the casing and releasing the second captive fastener includes unthreading the second captive fastener a second distance from the casing. In various embodiments, the first captive fastener includes a first blocking member configured to prevent the first captive fastener from being removed from the casing and the second captive fastener includes a second blocking member configured to prevent the second captive fastener from being removed from the casing.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 is a schematic view of a gas turbine engine, in accordance with various embodiments;
FIG. 2 is a schematic view of a casing of a gas turbine engine having a cover assembly, including a cover secured to a casing with captive fasteners, in accordance with various embodiments;
FIGS. 3A, 3B and 3C are perspective views of a cover assembly, including a cover secured to a casing with captive fasteners, showing steps of disassembly, in accordance with various embodiments;
FIGS. 4A, 4B and 4C are side views of captive fasteners used with a cover assembly for an engine casing, in accordance with various embodiments; and
FIG. 5 illustrates a method for accessing a component housed within a casing, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

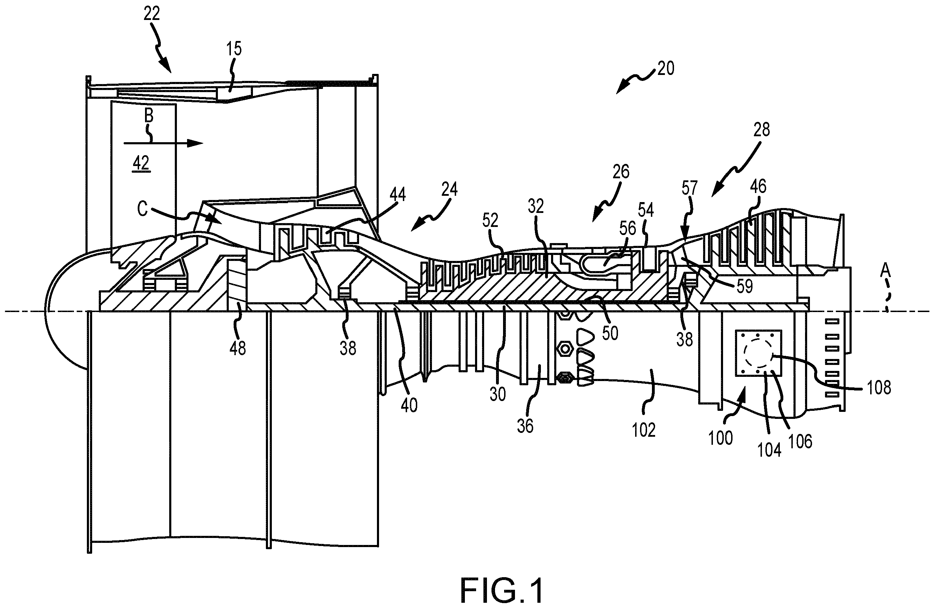

Referring now to the drawings, FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, while the compressor section 24 drives air along a core or primary flow path C for compression and communication into the combustor section 26 and then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines.

The gas turbine engine 20 generally includes a low speed spool 30 and a high speed spool 32 mounted for rotation about an engine central longitudinal axis A relative to an engine static structure 36 via several bearing systems 38. The low speed spool 30 generally includes an inner shaft 40 that interconnects a fan 42, a low pressure compressor 44 and a low pressure turbine 46. The inner shaft 40 is connected to the fan 42 through a speed change mechanism, which in this gas turbine engine 20 is illustrated as a fan drive gear system 48 configured to drive the fan 42 at a lower speed than the low speed spool 30. The high speed spool 32 includes an outer shaft 50 that interconnects a high pressure compressor 52 and a high pressure turbine 54. A combustor 56 is arranged in the gas turbine engine 20 between the high pressure compressor 52 and the high pressure turbine 54. A mid-turbine frame 57 of the engine static structure 36 is arranged generally between the high pressure turbine 54 and the low pressure turbine 46 and may include airfoils 59 in the core flow path C for guiding the flow into the low pressure turbine 46. The mid-turbine frame 57 further supports the several bearing systems 38 in the turbine section 28. The inner shaft 40 and the outer shaft 50 are concentric and rotate via the several bearing systems 38 about the engine central longitudinal axis A, which is collinear with longitudinal axes of the inner shaft 40 and the outer shaft 50.

The air in the core flow path C is compressed by the low pressure compressor 44 and then the high pressure compressor 52, mixed and burned with fuel in the combustor 56, and then expanded over the high pressure turbine 54 and low pressure turbine 46. The low pressure turbine 46 and the high pressure turbine 54 rotationally drive the respective low speed spool 30 and the high speed spool 32 in response to the expansion. It will be appreciated that each of the positions of the fan section 22, the compressor section 24, the combustor section 26, the turbine section 28, and the fan drive gear system 48 may be varied. For example, the fan drive gear system 48 may be located aft of the combustor section 26 or even aft of the turbine section 28, and the fan section 22 may be positioned forward or aft of the location of the fan drive gear system 48.

In various embodiments, a cover assembly 100 is removably secured to a casing 102 that surrounds the various components within the core flow path C, including, for example, the low pressure compressor 44, the high pressure compressor 52, the combustor 56, the high pressure turbine 54 and the low pressure turbine 46. In various embodiments, the cover assembly includes a cover 104 and one or more captive fasteners 106 configured to extend through the cover 104 and into the casing 102. The cover assembly 100 permits access to various of the components housed within the casing 102. For example, removal of the cover 104 provides access to a passageway 108 that extends through the casing 102. Access to the passageway 108 then provides access to at least one of the various components housed within the casing 102, such as, for example, a turbine rotor or stator blade disposed on one of the high pressure turbine 54 and the low pressure turbine 46 or a compressor rotor or stator blade disposed on one of the low pressure compressor 44 and the high pressure compressor 52. Access to the various components enables inspection, repair or replacement of the components without disassembly of the casing 102.

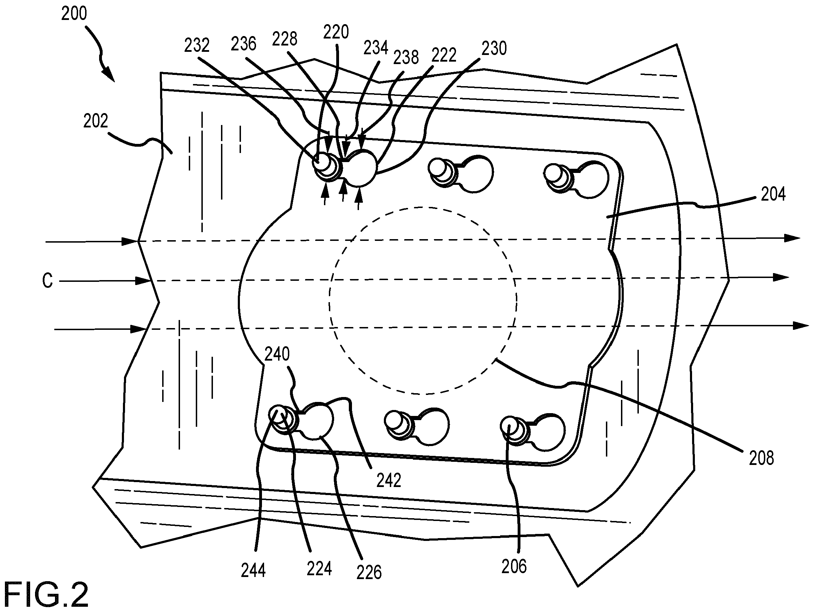

Referring now to FIG. 2, a cover assembly 200, removably secured to a casing 202 that encloses a core flow path C, is illustrated. In various embodiments, the cover assembly 200 includes a cover 204 configured to close a passageway 208 and one or more captive fasteners 206. The cover 204 may define a cover contour (e.g., a curved surface) configured to mate with a casing contour (e.g., a cylindrical surface defined by the casing 202). Mating of the cover contour with the casing contour enables the cover 204 to close or to seal the passageway 208, thus preventing gases flowing within the core flow path C defined by the casing 202, such as, for example, the core flow path C described above with reference to FIG. 1, from leaking or otherwise escaping the core flow path C during operation.

In various embodiments, the one or more captive fasteners 206 may include, for example, a first captive fastener 220 configured to extend through a first keyhole slot 222 and into the casing 202 and a second captive fastener 224 configured to extend through a second keyhole slot 226 and into the casing 202. In various embodiments, the first keyhole slot 222 extends through the cover 204 and includes a first engagement portion 228 and a first release portion 230. The first engagement portion 228 is configured to engage with a first head portion 232 of the first captive fastener 220 when the first captive fastener 220 is secured against the casing 202 (e.g., by tightly threading the first captive fastener 220 to the casing 202). Conversely, the first release portion 230 is configured to disengage with the first head portion 232 of the first captive fastener 220 when the first captive fastener 220 is unsecured against the casing 202 (e.g., by loosely threading the first captive fastener 220 to the casing 202).

In various embodiments, the first engagement portion 228 defines a characteristic dimension (e.g., a first engagement portion width or diameter 234) that is less than a characteristic dimension of the first head portion 232 (e.g., a first head portion diameter 236), while the first release portion 230 defines a characteristic dimension (e.g., a first release portion width or diameter 238) that is greater than the characteristic dimension of the first head portion 232. The characteristic dimension of the first engagement portion 228 being less than the characteristic dimension of the first head portion 232 enables the first captive fastener 220 to secure the cover 204 to the casing 202 when the first captive fastener 220 is secured against the casing 202. Conversely, the characteristic dimension of the first release portion 230 being less than the characteristic dimension of the first head portion 232 enables the cover 204 to be removed from the first captive fastener 220, as well as from the casing 202, when the first captive fastener 220 is unsecured against the casing 202.

In various embodiments, the second keyhole slot 226 extends through the cover 204 and includes a second engagement portion 240 and a second release portion 242. The second engagement portion 240 is configured to engage with a second head portion 244 of the second captive fastener 224 when the second captive fastener 224 is secured against the casing 202 (e.g., by tightly threading the second captive fastener 224 to the casing 202). Conversely, the second release portion 242 is configured to disengage with the second head portion 244 of the second captive fastener 224 when the second captive fastener 224 is unsecured against the casing 202 (e.g., by loosely threading the second captive fastener 224 to the casing 202). Similar to the description regarding the first keyhole slot 222, the second engagement portion 240 defines a characteristic dimension (e.g., a second engagement portion width or diameter) that is less than a characteristic dimension of the second head portion 244 (e.g., a second head portion diameter), while the second release portion 242 defines a characteristic dimension (e.g., a second release portion width or diameter) that is greater than the characteristic dimension of the second head portion 244. The characteristic dimension of the second engagement portion 240 being less than the characteristic dimension of the second head portion 244 enables the second captive fastener 224 to secure the cover 204 to the casing 202 when the second captive fastener 224 is tightly against the casing 202. Conversely, the characteristic dimension of the second release portion 242 being less than the characteristic dimension of the second head portion 244 enables the cover 204 to be removed from the second captive fastener 224, as well as being removed from the casing 202, when the second captive fastener 224 is unsecured against the casing 202.

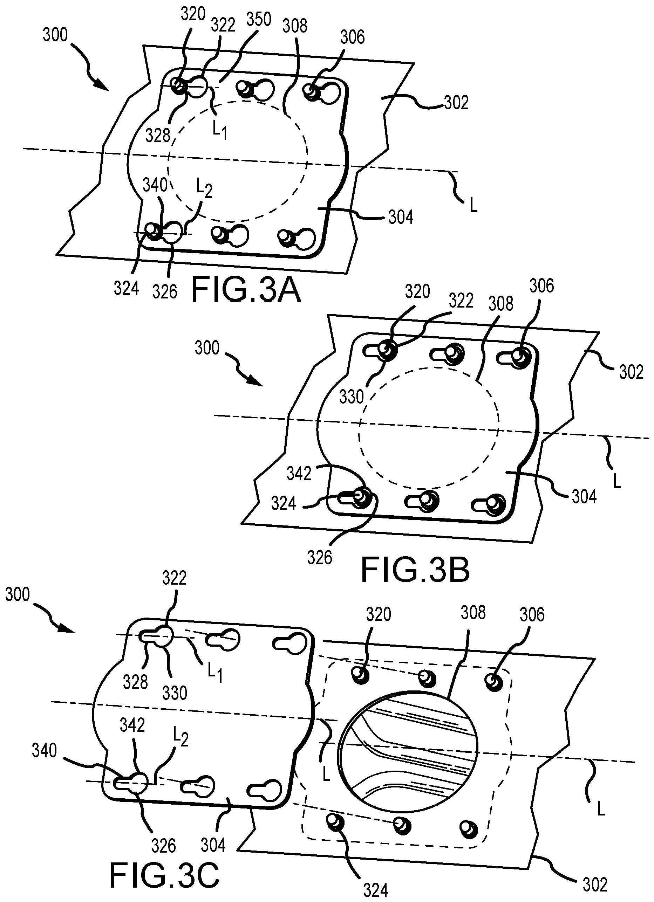

Referring now to FIGS. 3A, 3B and 3C, various views of a cover assembly 300, showing various steps of removing a cover 304 of the cover assembly 300 from a casing 302 to provide access to a passageway 308, are illustrated. In various embodiments, the cover assembly 300 includes the cover 304 and one or more captive fasteners 306. Similar to the cover assembly 200 described above with reference to FIG. 2, the one or more captive fasteners 306 may include, for example, a first captive fastener 320 configured to extend through a first keyhole slot 322 and into the casing 302 and a second captive fastener 324 configured to extend through a second keyhole slot 326 and into the casing 302. Various operational and dimensional characteristics of the first keyhole slot 322 and the second keyhole slot 326, with respect to the first captive fastener 320 and the second captive fastener 324, respectively, are similar to those described above with reference to FIG. 2 and, therefore, are not repeated here.

Referring now to FIG. 3A, the cover 304 is shown secured to the casing 302. More specifically, the first captive fastener 320 is secured against the casing 302 (e.g., by tightly threading the first captive fastener 320 to the casing 302) and thereby locks a first engagement portion 328 to the casing 302. Likewise, the second captive fastener 324 is secured to the casing 302 (e.g., by tightly threading the second captive fastener 324 to the casing 302) and thereby locks a second engagement portion 340 to the casing 302. In various embodiments, the first captive fastener 320 and the first keyhole slot 322 are disposed on a first lateral side 350 of the casing 302 and the cover 304, respectively, with respect to a longitudinal direction L. Similarly, in various embodiments, the second captive fastener 324 and the second keyhole slot 326 are disposed on a second lateral side 352 of the casing 302 and the cover 304, respectively, with respect to the longitudinal direction L. In various embodiments, the first keyhole slot 322 defines a first longitudinal orientation L1 and the second keyhole slot 326 defines a second longitudinal orientation L2, one or both of which are aligned with (e.g., parallel to) the longitudinal direction L.

Referring now to FIGS. 3B and 3C, in various embodiments, when the first captive fastener 320 and the second captive fastener 324 are unsecured against the casing 302 (e.g., by loosely threading the first captive fastener 320 and the second captive fastener 324 to the casing 302) the cover 304 is configured to slide along the casing in the longitudinal direction L. Referring to FIG. 3B, for example, when the first captive fastener 320 and the second captive fastener 324 are unsecured against the casing 302, the cover 304 is enabled to slide in the longitudinal direction L such that a first release portion 330 of the first keyhole slot 322 is positioned proximate the first captive fastener 320 and a second release portion 342 of the second keyhole slot 326 is positioned proximate the second captive fastener 324. So positioned, as illustrated in FIG. 3C, the cover 304 is enabled for removal from the casing 302, thereby exposing the passageway 308 for inspection, repair or replacement of components housed by the casing 302. In various embodiments, the cover 304 is secured against the casing 302 by reversing the order of the steps described above and illustrated in FIGS. 3A-3C.

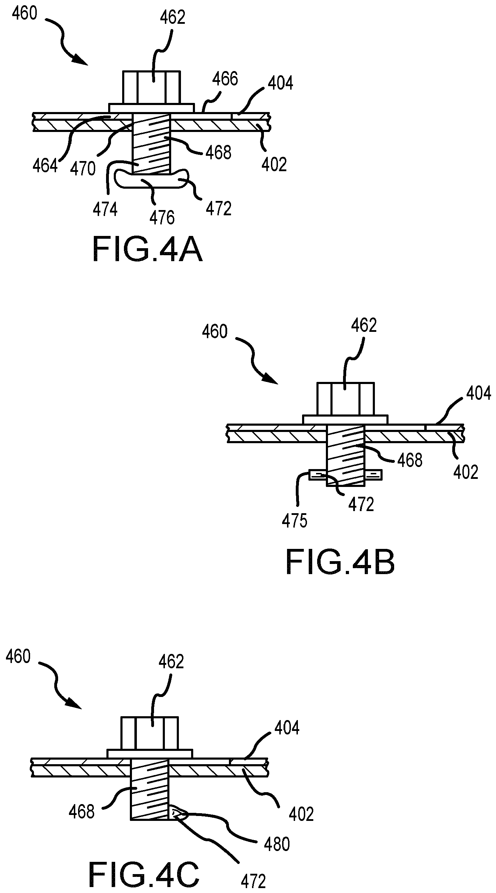

Referring now to FIGS. 4A, 4B and 4C, various captive fasteners, similar to the one or more captive fasteners 206 described above with reference to FIG. 2 and to the one or more captive fasteners 306 described above with reference to FIGS. 3A-3C are illustrated, in accordance with various embodiments. Referring to FIG. 1A, for example, a captive fastener 460 is illustrated as securing a cover 404 against a casing 402. In various embodiments, the captive fastener 460 includes a head portion 462 configured for engaging an engagement portion 464 of a keyhole slot 466. The captive fastener 460 includes a threaded body 468 configured for threadedly engaging a threaded aperture 470 that extends through the casing 402. In various embodiments, the threaded body 468 and the threaded aperture 470 enable the captive fastener 460 to be secured against the casing 402 (e.g., by tightly threading the captive fastener 460 to the casing 402), thereby securing the cover 404 to the casing 402, similar, for example, to the cover 304 being secured to the casing 302, as illustrated in FIG. 3A. The threaded body 468 and the threaded aperture 470 also enable the captive fastener 460 to be unsecured against the casing 402 (e.g., by loosely threading the captive fastener 460 to the casing 402), thereby enabling the cover 404 to slide with respect to the casing 402, similar, for example, to the cover 304 being unsecured and slid with respect to the casing 302, and then removed from the casing 302, as illustrated in FIGS. 3B and 3C.

In various embodiments, the captive fastener 460 includes a blocking member 472 disposed at a distal end 474 (e.g., at a first distal end or a second distal end) of the threaded body 468. The blocking member prevents the captive fastener 460 from being removed from the casing 402 during removal of the cover 404 from the casing 402. In various embodiments, as illustrated in FIG. 4A, the blocking member 472 may comprise a deformed portion 476 (e.g., a first deformed portion or a second deformed portion) disposed at the distal end 474 of the captive fastener 460. The deformed portion 476 may be provided at the distal end 474 of the captive fastener 460 by mechanically deforming the distal end 474 following initial placement of the captive fastener 460 through the casing 402. The deformation may be regular, leading to a generally axisymmetric deformation about an axis of the captive fastener 460 or may be irregular, such as, for example, deformation of the threaded body 468 on a single side of the captive fastener 460. In all cases, the deformed portion 476 is configured to prevent the captive fastener 460 from being withdrawn from the casing 402 following its initial placement therein. In various embodiments, as illustrated in FIGS. 4B and 4C, the blocking member 472 may take any of a variety of other forms, such as, for example, a pin member 475 (e.g., a first pin member or a second pin member) extending through the threaded body 468 (see FIG. 4B) or a weld 480 (e.g., a first weld or a second weld) positioned on the threaded body 468 (see FIG. 4C). In general, the disclosure contemplates the captive fastener 460 and the blocking member 472 associated with the captive fastener 460 assuming other forms, with or without the threaded body 468, for example, so long as the captive fastener 460 is rendered incapable of being withdrawn from the casing 402 during the process of removal of the cover 404 from the casing 402.

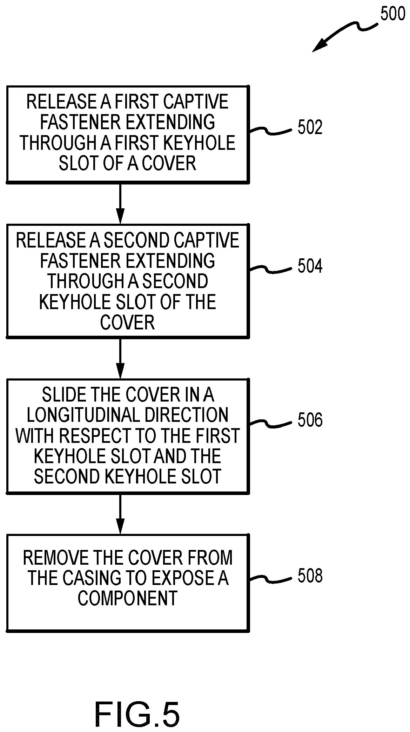

Referring now to FIG. 5, a method 500 for accessing a component housed within a casing is described with reference to the following steps. In various embodiments, a first step 502 includes releasing a first captive fastener extending through a first keyhole slot of a cover and into the casing. Similarly, a second step 504 includes releasing a second captive fastener extending through a second keyhole slot of the cover and into the casing. A third step 506 includes sliding the cover in a longitudinal direction with respect to the first keyhole slot and the second keyhole slot. A fourth step 508 includes removing the cover from the casing to expose the component.

In various embodiments, the step of releasing the first captive fastener includes unthreading the first captive fastener a first distance from the casing and releasing the second captive fastener includes unthreading the second captive fastener a second distance from the casing, wherein the first distance and the second distance are any distance sufficient to enable the cover to become unsecured to the casing and to readily slide away from the first captive fastener and the second captive fastener. In various embodiments, the first captive fastener may include a first blocking member configured to prevent the first captive fastener from being removed from the casing and the second captive fastener may include a second blocking member configured to prevent the second captive fastener from being removed from the casing.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A cover assembly, comprising:
a cover configured to close a passageway through a casing, the cover having a first keyhole slot; and
a first captive fastener configured to extend through the first keyhole slot and into the casing.

2. The cover assembly of claim 1, wherein the casing defines a casing contour and the cover defines a cover contour having the same shape as the casing contour.

3. The cover assembly of claim 1 or 2, wherein the cover is configured to slide along the casing in a longitudinal direction.

4. The cover assembly of claim 1, 2 or 3, wherein the first keyhole slot is disposed on a first lateral side of the cover.

5. The cover assembly of claim 4, wherein the cover includes a second keyhole slot disposed on a second lateral side of the cover.

6. The cover assembly of claim 5, wherein the first keyhole slot and the second keyhole slot are aligned in the longitudinal direction.

7. The cover assembly of any preceding claim, wherein the first captive fastener includes a threaded body configured to extend through the casing.

8. The cover assembly of any preceding claim, wherein the first captive fastener includes a first blocking member disposed on a first distal end of the first captive fastener.

9. The cover assembly of claim 6, further comprising a second captive fastener configured to extend through the second keyhole slot and into the casing.

10. The cover assembly of any preceding claim, wherein the first captive fastener includes a first blocking member configured to prevent the first captive fastener from being removed from the casing.

11. The cover assembly of claim 10, further comprising a second captive fastener configured to extend through a second keyhole slot and into the casing, the second captive fastener including a second blocking member configured to prevent the second captive fastener from being removed from the casing,
wherein, optionally, the first keyhole slot and the second keyhole slot are aligned in a longitudinal direction and disposed, respectively, on a first lateral side and a second lateral side of the cover with respect to the longitudinal direction,
wherein, optionally, the first blocking member comprises at least one of a deformed portion, a weld and a pin member disposed on a first distal end of the first captive fastener.

12. A gas turbine engine, comprising:
a casing;
a cover configured to close a passageway through the casing, the cover having a first keyhole slot and a second keyhole slot, both the first keyhole slot and the second keyhole slot aligned along a longitudinal direction;
a first captive fastener configured to extend through the first keyhole slot and into the casing; and
a second captive fastener configured to extend through the second keyhole slot and into the casing.

13. The gas turbine engine of claim 12, wherein the first keyhole slot is disposed on a first lateral side of the cover and the second keyhole slot is disposed on a second lateral side of the cover,
wherein, optionally, the first captive fastener includes a first blocking member configured to prevent the first captive fastener from being removed from the casing and the second captive fastener includes a second blocking member configured to prevent the second captive fastener from being removed from the casing,
wherein, optionally, the first blocking member comprises at least one of a first deformed portion, a first weld and a first pin member disposed on a first distal end of the first captive fastener and the second blocking member comprises at least one of a second deformed portion, a second weld and a second pin member disposed on a second distal end of the second captive fastener.

14. A method for accessing a component housed within a casing, comprising:
releasing a first captive fastener extending through a first keyhole slot of a cover and into the casing;
releasing a second captive fastener extending through a second keyhole slot of the cover and into the casing;
sliding the cover in a longitudinal direction with respect to the first keyhole slot and the second keyhole slot; and
removing the cover from the casing to expose the component.

15. The method of claim 14, wherein releasing the first captive fastener includes unthreading the first captive fastener a first distance from the casing and releasing the second captive fastener includes unthreading the second captive fastener a second distance from the casing,
wherein, optionally, the first captive fastener includes a first blocking member configured to prevent the first captive fastener from being removed from the casing and the second captive fastener includes a second blocking member configured to prevent the second captive fastener from being removed from the casing.
